(19)

**Europäisches Patentamt**
**European Patent Office**
**Office européen des brevets**

(11) **EP 1 997 578 B1**

(12) **EUROPEAN PATENT SPECIFICATION**

(45) Date of publication and mention
of the grant of the patent:
**01.12.2010 Bulletin 2010/48**

(21) Application number: **06730340.4**

(22) Date of filing: **22.03.2006**

(51) Int Cl.:
*B23K 9/23* (2006.01)          *B23K 9/00* (2006.01)
*B23K 31/00* (2006.01)          *G01N 3/30* (2006.01)

(86) International application number:
**PCT/JP2006/306392**

(87) International publication number:
**WO 2007/108139 (27.09.2007 Gazette 2007/39)**

(54) **METHOD OF VERIFYING BRITTLE FRACTURING RESISTING PERFORMANCE OF HIGH HEAT INPUT BUTT-WELDED JOINT**

VERFAHREN ZUR ÜBERPRÜFUNG DES SPRÖDBRUCHWIDERSTANDS VON STUMPFSCHWEISSVERBINDUNGEN MIT HOHER WÄRMEZUFUHR

PROCEDE PERMETTANT DE VERIFIER LES CAPACITES DE RESISTANCE AUX RUPTURES FRAGILES D'UN JOINT DE SOUDURE BOUT A BOUT A APPORT DE CHALEUR ELEVE

(84) Designated Contracting States:
**DE DK PL RO**

(43) Date of publication of application:
**03.12.2008 Bulletin 2008/49**

(73) Proprietors:
• **Nippon Steel Corporation**
**Chiyoda-ku**
**Tokyo**
**100-8071 (JP)**
• **Mitsubishi Heavy Industries, Ltd.**
**Minato-ku**
**Tokyo 108-8215 (JP)**

(72) Inventors:
• **ISHIKAWA, Tadashi**
**Futtsu-shi, Chiba 293-8511 (JP)**
• **OHTANI, Jun**
**Oita-shi, Oita 870-8566 (JP)**
• **TADA, Masuo**
**Nagasaki-shi, Nagasaki 851-0392 (JP)**
• **HIROTA, Kazuhiro**
**c/o Nagasaki Shipyard & Machinery Works**
**Nagasaki-shi, Nagasaki 850-8610 (JP)**
• **FUKUI, Tsutomu**
**Imabari-shi, Ehime 794-0013 (JP)**

• **KITADA, Hiroshige**
**Tokyo 102-8567 (JP)**
• **YAJIMA, Hiroshi**
**Nagasaki-shi, Nagasaki 852-8045 (JP)**
• **SHIRAKIHARA, Hiroshi**
**c/o Nagasaki Shipyard & Machinery Works,**
**Nagasaki-shi, Nagasaki 850-8610 (JP)**

(74) Representative: **Vossius & Partner**
**Siebertstrasse 4**
**81675 München (DE)**

(56) References cited:
JP-A- 2001 001 148          JP-A- 2003 202 280
JP-A- 2005 125 348          JP-A- 2005 125 348
JP-A- 2005 144 552          JP-A- 2005 144 552
JP-A- 2006 088 184          US-A- 5 080 732

• C. SMITH ET AL: "THE EFFECT OF A LONG POST WELD HEAT TREATMENT ON THE INTEGRITY OF A WELDED JOINT IN A PRESSURE VESSEL STEEL" INTERNET ARTICLE, [Online] 16 May 2001 (2001-05-16), pages 1-16, XP002543403 Retrieved from the Internet: URL:http://www.pkn.co.za/pap-QTWSD.html>[retrieved on 2009-08-28]

**EP 1 997 578 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method of verification of mechanical properties of a welded joint in a structure obtained by longe heat input butt welding according to the preamble of claim 1 (see, for example, JP 2005/144 552 A).

BACKGROUND ART

In a welded structure, the locations where fractures are mostly likely to occur are the welded joint parts. The reasons are that weld defects occur at the time of welding and these defects have a high likelihood of becoming stress concentration parts serving as starting points of fracture and, further, due to the effect of weld heat, the steel plate structure becomes coarser and the resistance value against brittle fracture of the welded joint parts, that is, the fracture toughness value Kc, falls.

For this reason, to secure safety of a welded structure, it is necessary to correctly evaluate the fracture toughness, value, Kc of the welded joint parts. As that evaluation test, the center notched wide plate tensile test where the residual stress of the welded joint part strongly acts has been proposed and has been broadly used up to now.

This test is called the "deep notch test" and evaluates the limit value of occurrence of brittle fracture at a welded joint part based on linear fracture mechanics as the fracture toughness value Kc.

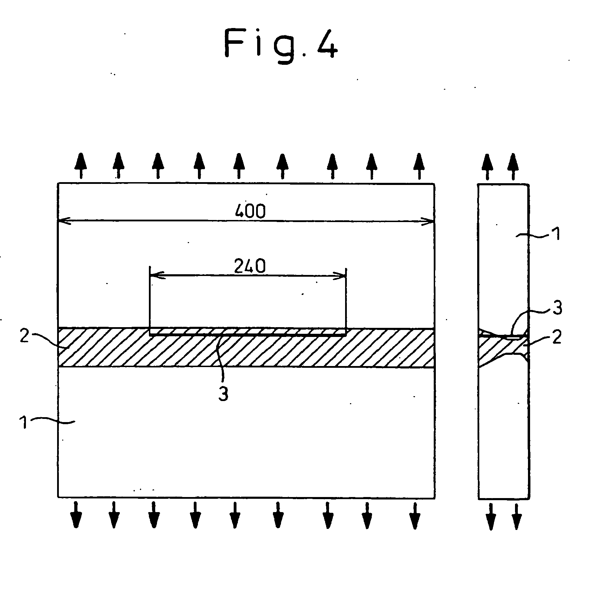

A deep notch test, as shown in FIG. 4, is a test applying tension in the arrow directions to a test piece 1 of a standard width of 400 mm having weld metal 2 at its center and formed at its center with a notch 3 of a standard length of 240 mm at a position assumed to be the weakest part of the weld joint.

That is, in a deep notch test, a large test piece and a large testing machine are required and the cost is also tremendous, so for quality control at the time of welding or steel material shipment tests, an alternative test to that, that is, the V-notch Charpy impact test, is being widely used.

For example, the material standards established by slip classification society are based on the correlation between the Charpy test characteristic values (absorption energy vE value at test temperature or fracture transition temperature vTrs) and the fracture toughness, value, Kc obtained in a deep notch test (see ClassNK Magazine No. 248, 1999 (III), pp.158-167).

Further, up until now, the practice has been to evaluate the fracture toughness value of welded joints of mainly steel plate for ship hull structure use of a plate thickness of 50 mm or less in accordance with the above correlation and to use those results to discuss the performance and properties required for steel plate for ship hull use.

As a result, as steel plate for ship hull use considering the fracture toughness value of the welded zones, steel plate superior in brittle fracture characteristic and fatigue characteristic (TMCP steel plate) has been developed (see Japanese Patent Publication (A) No. 6-88161). TMCP steel plate with a plate thickness of 50 mm or so is being used for the construction of large-sized tankers and under 6000TEU container ships. In recent years, however, the need for construction of over 6000TEU large-sized container ships has risen. Steel plate with a plate thickness of 60 mm or more steel plate is being used as structural steel plate for ship hull use.

However, structural steel plate for ship hull use currently in practical use has a strength, in terms of yield strength, of the 390 MPa level. That is, in steel plate with a yield strength of 390 MPa or more and a plate thickness of 50 mm or more, the correlation between the results of a Charpy test and the results of a deep notch test has not been sufficiently elucidated. It is necessary to verify the mechanical properties of welded joints in structures obtained by welding high strength steel plate with a plate thickness of 50 mm or more and study whether conventional knowledge can be applied for controlling the quality of welded joints.

Normally, to prevent deformation or warping concentrating at the welded joint parts, the basic rule in design guidelines for welded joint parts is to make the strength or hardness of the weld metal higher than the strength or hardness of the base metal. When selecting the weld metal, an overmatching joint design is selected in comparison with the base metal strength. However, it is necessary to also consider if the above joint design can be applied to the design of welded joints in a structure obtained by welding high strength steel plate with a plate thickness of 50 mm or more.

DISCLOSURE OF THE INVENTION

Welded structures are being made increasingly larger in size. For example, in construction of a container ship of over 6000TEU, it is being demanded to construct it using high strength thick-gauge steel plate with a plate thickness of over 50 mm and with a high design stress.

Therefore, the inventors investigated the performance and properties of welded joints obtained by butt welding high strength steel plate with a plate thickness of over 50 mm since welded joint parts are the locations most likely to fracture.

As a result, they discovered that in the performance and properties of the above welded joints (large heat input welded joints), even if good results are shown in the small sized tests of V-notch Charpy impact tests, a good fracture toughness value Kc is not necessarily exhibited in the large-sized fracture tests, such as deep notch tests.

That is, they discovered that "the correlation of the results of Charpy tests and the fracture toughness value Kc", which up until now had been confirmed in the performance and properties of welded joints in the case of butt welding steel plate with a yield strength of the 390 MPa class and with a plate thickness of 50 mm or less, does not stand.

Therefore, the present invention has as its object, based on the above discovery, the formation of a welded joint with a sufficiently high fracture toughness value, Kc, when butt welding high strength steel plate with a yield strength of the 460 MPa class and a plate thickness of over 50 mm by a large heat input, in particular high strength steel plate for ship hull use, and provision of a method of verification of its properties for enabling reliable formation of the joint.

In the past, in design of a welded joint, to prevent deformation or warping from concentrating at the welded joint parts, basically the strength or hardness of the weld metal was made higher than the strength or hardness of the base metal ("overmatching"), but the inventors believed that there was a problem in the conventional overmatching based on their discovery that the above-mentioned "correlation between the results of a Charpy test and the fracture toughness value, Kc" does not stand and engaged in a systematic study of the factors governing the fracture toughness, value, Kc of welded joint parts to achieve the above object under the above thinking.

As a result, the inventors discovered that when butt welding a high strength steel plate with a yield strength of the 460 MPa class and a plate thickness of over 50 mm by a large heat input, the hardness of the weld metal has a large effect on the correlation between the Charpy test characteristic values and fracture toughness value Kc.

That is, they discovered that in a large heat input butt welded joint, the relationship between the hardness of the weld metal and the hardness of the base metal has a large effect on the fracture toughness value Kc at the fusion line part of the welded joint and discovered that the conventionally known "correlation between the results of a V-notch Charpy impact test and fracture toughness value" is greatly affected by the hardness of the weld metal.

Further, based on the above discovery, the inventors established a technique for verifying the fracture toughness value of a large heat input butt welded joint based on a predicted fracture toughness value, Kc, value and a required Kc value from both the hardness of the weld metal and results of a Charpy impact test and thereby completed the present invention.

A method of verification of mechanical properties of a welded joint according to the present invention is defined in claim 1.

according to the present invention, in a welded joint obtained by butt welding a high strength steel plate with a yield strength of the 390 MPa or 460 MPa class and a plate thickness of over 50 mm, welding using high strength steel plate for ship hulls, by selecting a suitable welding method, welding material, and steel material, it is possible to secure a resistance characteristic against brittle fracture of a welded structure.

BRIEF DESCRIPTION OF THE DRAWINGS

FIG. 1 shows an example of the results of analysis by FEM (3D finite element method) of the crack opening stress distribution at different positions away from a notch tip in the direction of crack progression in the case of providing a test piece with a plate thickness of 70 mm with a notch at the boundary part (FL) between the weld metal (WM) and.weld heat affected zone (HAZ) and at the weld heat affected zone (HAZ) and of a CTOD (Crack Tip Opening Displacement) at the notch tip of 0.05 mm.

FIG. 2 is a view showing the effect of the hardness ratio (Hv(WM)/Hv(BM)) of the weld metal (WM) and the base metal (BM) on the Kc value.

FIG. 3 is a view showing the correspondence between the Kc value estimated from the results of a Charpy test (vTrs) and the measured Kc value by the deep notch test.

FIG. 4 is a view showing a deep notch test piece.

BEST MODE FOR CARRYING OUT THE INVENTION

Up until now, in the design of welded joints, the basic rule to prevent deformation or warping from concentrating at the welded joint parts has been to make the strength or hardness of the weld metal (WM) higher than the strength or hardness of the base metal (BM). The welding material has been selected so that its strength overmatches the strength of the base metal.

As explained above, the inventors came to believe that "there is a problem in this overmatching in the case of designing welded joints of high strength thick-gauge steel plate". To clarify the situation with this problem, the inventors used steel plate with a yield strength of the 460 MPa class and used a welding material selected for overmatching by the weld metal so as to form welded joints and ran deep notch tests to evaluate the mechanical properties.

As a result, the above welded joints exhibited a sufficient absorption energy value of 90J or more at -20°C (test temperature) and exhibited a fracture transition temperature of -20°C, an extremely good value, in V-notch Charpy tests of the welded joint parts, but exhibited a fracture toughness value Kc of 2000N/mm$^{1.5}$ or less, an extremely low value, in deep notch tests.

Ultimately, from these test results, it was learned that when designing welded joints of high strength thick-gauge steel plate in accordance with the conventional overmatching method, the performance and properties of the welded joints greatly deviate from the conventionally known "correlation between results of V-nbtch Charpy test and results of deep notch test".

Therefore, the inventors investigated in detail the points of occurrence of fractures in the deep notch tests and as a result found that

(i) fractures occur at the position of the boundary between the weld metal (WM) and the weld heat affected zone (HAZ) (weld fusion line [FL]) and
(ii) the microstructure at the portion where a fracture occurs is the same as the microstructure at the part of occurrence of a fracture as observed in a Charpy test piece and
further predicted that
(iii) analysis by the 3D finite element method of the states of distribution of the local stress forming the driving force behind fractures in deep notch tests and Charpy tests would find that the two distributions are remarkably different.

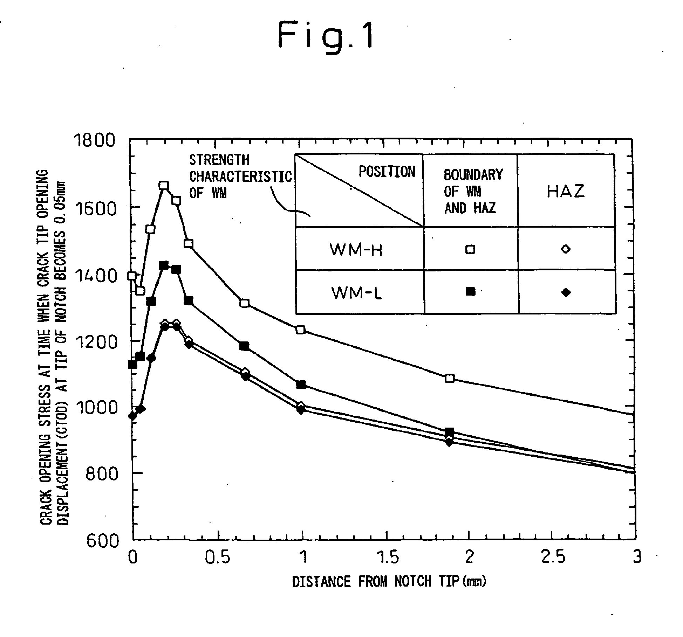

FIG. 1 shows an example of the results of analysis by FEM (3D finite element method) of the crack opening stress distribution at different positions away from a notch tip in the direction of crack progression in the case of providing a test piece with a plate thickness of 70 mm with a notch at the boundary part (FL) between the weld metal (WM) and weld heat affected zone (HAZ) and at the weld heat affected zone (HAZ) and of a CTOD (Crack Tip Opening Displacement) at the notch tip of 0.05 mm.

From this drawing, it is learned that (iv) if the plate thickness becomes over 50 mm to about 70 mm, the degree of constraint (force) in the plate thickness direction remarkably increases and that if the strength of the weld metal (WM) is higher than the strength of the base metal (BM) or weld heat affected zone (HAZ) (in the case of WM-H), local stress will remarkably increase at the boundary of the weld metal (WM) and weld heat affected zone (HAZ) (in the figure, see white squares [WM-H] and black squares [WM-L]).

On the other hand, even when the strength of the weld metal (WM) is higher than the strength of the base metal (BM) or weld heat affected zone (HAZ), in the weld heat affected zone (HAZ), the local stress will not increase and will become substantially the same as the case where the strength of the weld metal (WM) is low (in the case of WM-L).

From this, the reason for the Kc value falling is believed to be due to the increase in the local stress at the boundary of the weld metal (WM) and the weld heat affected zone (HAZ) when the strength of the weld metal (WM) is higher than the strength of the base metal (BM) or the weld heat affected zone (HAZ) (in the case of WM-H) .

That is, as a result of the above analysis, the inventors discovered that (v) to suppress the remarkable increase in the local stress at the boundary of the weld metal (WM) and the weld heat affected zone (HAZ) and improve the Kc value, it is necessary to make the strength of the weld metal (WM) as low as possible.

Here, based on the above analysis results, the inventors measured the fracture toughness value Kc while changing the hardness of the weld metal (WM) (Hv(WM)) in various ways and plotted the Kc measured value against the "hardness of weld metal [Hv(WM)]/hardness of base metal [Hv(BM)]".

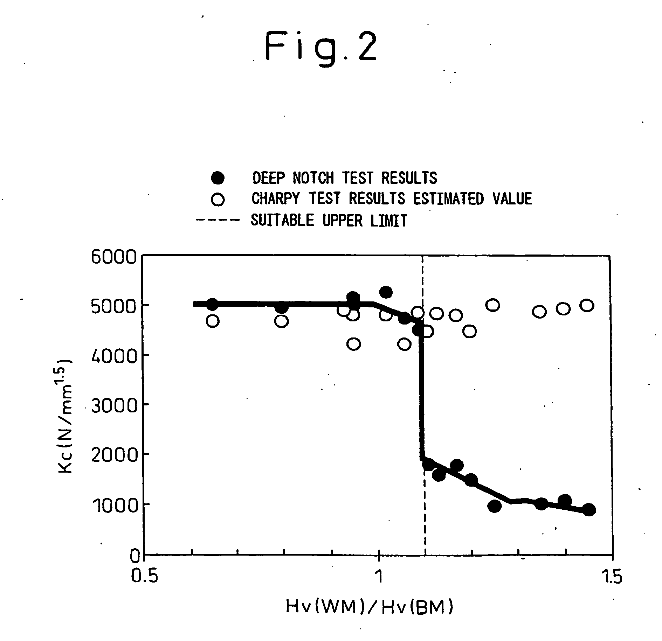

As a result, the inventors discovered that, as shown by the black dots in FIG. 2, if suppressing the hardness of the weld metal [Hv(WM)] to "hardness of the base metal [Hv(BM)]×1.1 or less", it is possible to prevent a drop in the fracture toughness value due to the increase in the local stress and to secure a fracture toughness value of about 5000N/mm$^{1.5}$.

In particular, in high strength steel with a YP of 390 MPa or more, the increase in local stress becomes more remarkable, so to secure the above extent of fracture toughness value, it is desirable to limit the hardness of the weld metal (Hv(WM)] by a numerical value to "210 or less".

In this way, the inventors discovered that making the hardness of the weld metal [Hv(WM)] lower than the hardness of the base metal [Hv(BM)] is necessary to secure a fracture toughness value Kc commensurate with the fracture characteristic (toughness) governed by the microstructure in a welded joint, that is, a Kc value of at least over 2000N/mm$^{1.5}$, preferably a Kc value of over 3580N/mm$^{1.5}$, more preferably a Kc value of 4354N/mm$^{1.5}$ or more.

Here, the fracture toughness value Kc of "at least over 2000N/mm$^{1.5}$" to be secured (in the present invention, prescribed as the "fracture toughness value Kc is over 2000N/mm$^{1.5}$") is the value at -10°C (reference temperature) based on the ship hull design temperature set by ClassNK when designing a steel welded structure for ship hull use (-10°C: lowest temperature of use of ship).

Note that the preferable Kc value 3580N/mm$^{1.5}$ is the value required in the case of evaluation by a test piece in which a fatigue crack has been introduced. Further, the more preferable Kc value 4354N/mm$^{1.5}$ is the value required in the case of evaluation by a test piece with a notched tip width of 0.1 mm or so.

Further, according to the following formulas (1) to (3), it is possible to estimate the Kc value based on the results of a Charpy test (vE), so the estimated Kc value is also shown in FIG. 2.

$$Kc(T)=5.6\sigma y_0 \cdot \exp(k_0(1/i\bar{T}k-1/T))\qquad(1)$$

$$iTk=(0.00321\sigma y_0+0.391)vTrs + A\sqrt{t}+X\qquad(2)$$

$$k_0=C \cdot iTk-D\qquad(3)$$

where,

$\sigma y_0$: room temperature yield strength (kg/mm$^2$)
t: plate thickness (mm), T: test temperature
A: coefficient relating to plate thickness effect,

where $1.5 \leq A \leq 3.5$

X: coefficient relating to notch sharpness, where $-20 \leq X \leq 80$
C: coefficient relating to $k_0$, where $4 \leq C \leq 89$
D: coefficient relating to $k_0$, were $100 \leq D \leq 600$

The above formulas (2) and (3) are formulas of correlation of Kc and the Charpy characteristic. A is a coefficient relating to the plate thickness effect determined dynamically and is usually 1.5 to 3.5, but from the viewpoint of the precision of estimation is preferably 2.5 to 3.0. X is a constant depending on the method of production of the steel plate and the welding method at the welded joint and is usually -20 to 80, but with TMCP is preferably 15 to 70.

The above formula (3) is a formula expressing the value becoming the standard in the relationship between the Kc and test temperature. C and D are constants determined by the method of production of the steel material, the welding method, the structure, etc. Normally, C is 4 to 89 and D is 100 to 600, but from the viewpoint of application of TMCP steel, C is preferably 6.5 to 7.0 while D is preferably 400 to 500.

Note that, in the above formulas (2) and (3), the values according to the present invention are A=2.74, X=66.1 or 56.1, C=6.65, and D=440.

Formulas (2) and (3) used in the present invention have been known in the past as formulas expressing the correlation between the Kc and Charpy characteristics. However, these formulas are experimental formulas. It is a widely known fact that they are greatly affected by the strength of the steel material and by the welding method. Up until now, there has never been a systematic survey of the correlation between the Kc and Charpy characteristics in steel plate with a yield point of 390 MPa or more or steel plate with a plate thickness of over 50 mm - which had not existed as ship hull use steel plate.

The present invention found for the first time that even with steel plate with a yield point of 390 MPa or more and steel plate with a plate thickness of over 50 mm, it was possible to apply the form of the above formulas to the correlation between Kc and Charpy characteristics and clarified the ranges and suitable values of constants or coefficients able to be applied in the above scope.

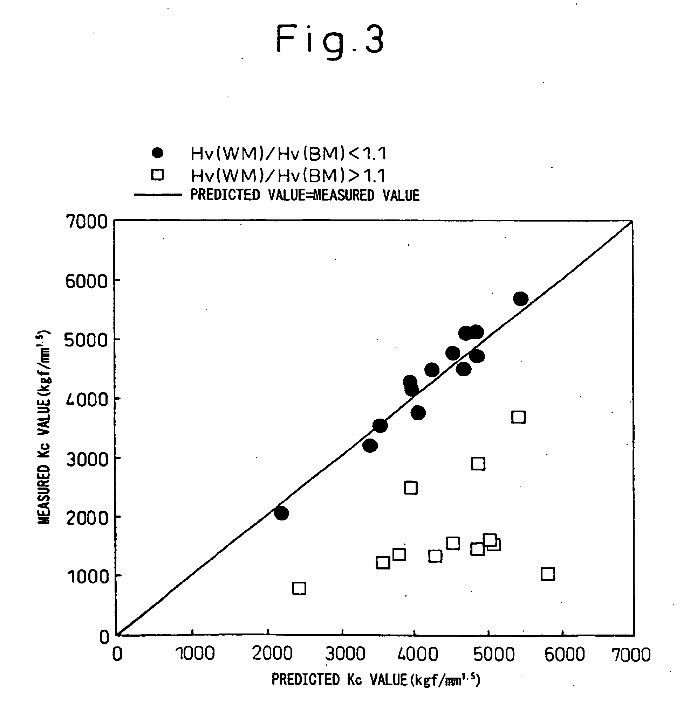

There is no correlation between the estimated Kc value and Hv(WM)/Hv(BM), but in the range of "Hv(WM)/Hv(BM)≤1.1", the estimated Kc value and the measured Kc value substantially correspond, so the inventors investigated this correspondence in detail. The results are shown in FIG. 3.

As shown in FIG. 3, in "Hv(WM)/Hv(BM)≤1.1", the estimated Kc value based on the Charpy test results (vE) and the measured Kc value correspond. This means that in the above hardness ratio range, the results of a conventional V-notch Charpy impact test can be used to evaluate the brittle fracture resistance characteristic of a large heat input butt welded joint.

That is, the inventors discovered that to secure a predetermined fracture toughness value Kc in a welded joint, it is critical to prevent the local stress from increasing at the weakest part of a welded joint, that is, the weld fusion line (FL), as stated above, but that simultaneously it is necessary to secure a microscopic brittle fracture resistance characteristic near the FL and that this can be evaluated by a conventional V-notch Charpy impact test if "Hv(WM)/Hv(BM) ≤1.1".

In the present invention, the hardness of the weld metal [Hv(WM)] has to satisfy "Hv(WM)/Hv(BM) ≤1.1", but when butt welding high strength structural use thick-gauge steel plate for ship hull use with a yield point of the 460 MPa class and a plate thickness of over 50 mm, to secure a Kc value over 2000N/mm$^{1.5}$ at the weld zone, preferably a Kc value over 3580N/mm$^{1.5}$, more preferably a Kc value of 4354N/mm$^{1.5}$ or more, it is necessary to make the hardness of the weld metal 210 or less.

In a welded structure, it is easy to calculate the required fracture toughness value: $Kq = \sigma_D \sqrt{(\pi a)}$ from the design stress $\sigma_D$ and the assumed defect dimension $\underline{a}$ using linear fracture mechanics. Therefore, if comparing Kq and Kc and Kq≤Kc, the welded structure can be evaluated as being safe against occurrence of brittle cracks.

For example, the standard of the required toughness value of structural steel plate for ship hull use etc. stands based on the above evaluation and thinking (see Nonpatent Document 1). Further, Kq≤Kc at -10°C (reference temperature based on ship hull design temperature set by ClassNK) is sought.

Therefore, in the present invention, when (a1) a ratio Hv(WM)/Hv(BM) of a hardness of the weld metal Hv(WM) and a hardness of the base metal Hv(BM) is less than 1.1 or (a2) a hardness of the weld metal Hv(WM) is 210 or less, (b2) a fracture toughness value Kc of a weld zone should satisfy the following formula:

$Kc \geq Kq = \sigma_D \sqrt{(\pi a)}$ ($\sigma_D$: design stress, a: assumed defect dimension)

Note that the fracture toughness value Kc, as explained above, is the value at -10°C based on the ship hull design temperature set by ClassNK (-10°C).

Here, the assumed defect dimension (a) is the value of the dimension of a fault set assuming there is a fault arising at the time of welding, a fatigue crack growing starting from this, or other fault present in the welded joint.

The present invention enables the formation of a welded joint superior in brittle fracture resistance characteristic in large heat input butt welding of welded structure use steel plate for ship hull use with a yield point of the 390 MPa class to the 460 MPa class.

It is possible to confirm whether the welded joint of the present invention is truly provided with the required fracture toughness value Kc by using the deep notch test to measure the fracture toughness value.

However, the deep notch test, as mentioned above, is a larger scale test compared to the Charpy test. There are the difficulties that it is troublesome to prepare the test piece and difficult to quickly deal with testing when required.

Therefore, based on the discoveries that in Hv(WM)/Hv(BM)≤1.1, the predicted Kc value based on the Charpy test results (vE) and the measured Kc value correspond (see FIG. 3) and that this enables evaluation of the brittle fracture resistance characteristic of a large heat input butt welded joints based on the results of a conventional V-notch Charpy impact test in the above range, the inventors invented a method for verification of the brittle fracture resistance characteristic by the results of a V-notch Charpy impact test.

The verification method comprises:

(a) measuring a hardness of a weld metal Hv(WM),
(b) measuring an absorption energy vE and transition temperature vTrs of a welded joint part by a V-notch Charpy impact test,
(c) confirming that the above measured Hv(WM) value satisfies a required Hv value and that the above measured vE value satisfies a required vE value, and
(d) verifying that a predicted fracture toughness value Kc based on a measured transition temperature vTrs is a required Kc value.

To effectively perform the above verification according to the present invention, it is required to set the required Hv value at less than the hardness of the base metal Hv(BM)×1.1 or 210 or less and to set the required vE value at -10 °C of more than 53J in terms of the designed temperature of the ship structure, especially in case of ship hull.

The above required Kc value is suitably set by a numerical value in accordance with the application of the welded structure or the steel plate strength. Further, it may also be set based on the $Kq = \sigma_D \sqrt{(\pi a)}$ of linear fracture mechanics ($\sigma_D$: design stress, a: assumed defect dimension).

Further, the fracture toughness value Kc is calculated based on the measured absorption energy vE by the following formulas (1) to (3) and it is verified if the fracture toughness value Kc is the required Kc value or more:

$$Kc(T) = 5.6\sigma y_0 \cdot \exp(k_0(1/iTk - 1/T)) \qquad (1)$$

$$iTk = (0.00321\sigma y_0 + 0.391)vTrs + A\sqrt{t+X} \qquad (2)$$

$$k_0 = C \cdot iTk - D \qquad\qquad (3)$$

where,

σy$_0$: room temperature yield strength (kg/mm$^2$)

t: plate thickness (mm), T: test temperature

A: coefficient relating to plate thickness effect, where $1.5 \leq A \leq 3.5$

X: coefficient relating to notch sharpness, where $-20 \leq X \leq 80$

C: coefficient relating to $k_0$, where $4 \leq C \leq 89$

D: coefficient relating to $k_0$, where $100 \leq D \leq 600$

The technical meanings of the above formulas (2) and (3) and the usual ranges, preferable ranges, and further the most preferable values of the constants A, X, C, and D are as explained above.

In this way, based on the results of a Charpy impact test, it is possible to verify the brittle fracture resistance characteristic of a large heat input butt welded joint faster and more simply than with a deep notch test.

The high strength steel plate for welded structures and ship's shell plates used in the present invention may be produced from welding use structure steel of known compositions.

For example, steel having as its basic ingredients, by mass%, C: 0.02 to 0.20%, Si: 0.01 to 1.0%, Mn: 0.3 to 2.0%, Al: 0.001 to 0.20%, N: 0.02% or less, P: 0.01% or less, and S: 0.01% or less and, in accordance with the improvement of the base metal strength or joint toughness or other properties required, containing one or more of Ni, Cr, Mo, Cu, W, Co, V, Nb, Ti, Zr, Ta, Hf, REM, Y, Ca, Mg, Te, Se, and B is preferable.

The plate thickness of the steel plate is not particularly limited, but the present invention is preferably applied to for example high strength steel plate for large-sized ship shell plate with a plate thickness of over 50 mm.

EXAMPLES

Below, the present invention will be explained based on examples, but the conditions in the examples are just examples of conditions adopted for confirming the workability and effect of the present invention.

The present invention may employ various conditions or combinations of conditions so long as not departing from the gist of the present invention and achieving the object of the present invention.

Example 1

The inventors prepared thick-gauge steel plates with a plate thickness of 50 mm to 100 mm and tested and studied them for the features and performance of welded joints formed by various types of welding methods. The results are shown in Table 1 and Table 2 (continuation of Table 1).

In Table 1, in the column "Joint type", SEG-ARC refers to simplified electrogas welding, EG refers to the usual electrogas welding, SMAW refers to shielded metal arc welding, SAW refers to submerged arc welding, and VEGA2 refers to electrogas arc welding with two facing electrodes.

Hv(BM) is the average value of the hardness in the plate thickness direction of the base metal measured by a 10 kg indentation. Hv(WM) is the value of the hardness measured by a 10 kg indentation at the center of plate thickness of the weld metal.

In each welded joint, test pieces were taken at positions 1 mm below the surface of the plate thickness (shown by "S" in Table 1), 1/4 of the plate thickness (shown by "Q" in Table 1), and 1/2 of the plate thickness (shown by "C" in Table 1) and were notched so that the notches matched with the weld metal, weld fusion line (FL), and locations of 1 mm, 3 mm, and 5 mm from the FL at the HAZ side so as to prepare Charpy test pieces.

The above Charpy test pieces were subjected to a Charpy.test while changing the test temperature. The value of the location where vTrs was the highest was shown in the table as vTrs. Using that value, the inventors calculated the estimated fracture toughness values Kc(FC) and Kc(MN) using the following formulas according to the present invention:

$$iTk = (0.00321 \sigma y_0 + 0.391) vTrs + 2.74\sqrt{t} + X$$

$$k_0 = C \cdot iTk - D$$

$$Kc(T) = 5.6\sigma y_0 \cdot \exp(k_0(1/iTk - 1/T))$$

where, T is the test temperature (K), $\sigma y_0$ is the yield strength at room temperature, and t is the plate thickness. C and D are constants, where C=6.65 and D=440.

Regarding the fatigue cracks, cracks, etc. present in a welded joint of a welded structure, it is assumed that that the tip radius is zero, so the above-mentioned Kc value is the Kc value found using a center cracked tensile test piece with a fatigue crack. That value is used as explained above for joint design. This Kc value is referred to as "Kc (FC)" to differentiate it from the next explained Kc(MN).

However, introducing a fatigue crack in a large-sized tensile test requires tremendous cost and time and is not efficient, so normally a center notched tensile test piece given a machined notch of a tip width of 0.1 mm is used to find the fracture toughness value Kc. This Kc is called the "Kc(MN)".

Assuming the hardness of the weld metal is controlled by making X=56.1 when finding Kc(MN) and making X=66.1 when finding Kc(FC) according to the present invention, the inventors experimentally confirmed that a good correlation is given between the experimental results and the Kc estimated value, so the above value was used for X.

The fracture toughness value Kc ($N/mm^{1.5}$) is the value found at the predetermined test temperature shown in Table 2 in a deep notch test.

In Table 2, when comparing the results of the deep notch tests, that is, the measured Kc value, and the estimated Kc value, it is sufficient to refer to the estimated Kc(MN) value. Further, the estimated Kc value in the case of a fatigue crack corresponding to the estimated Kc(MN) value is the estimated Kc(FC) value.

Note that, the above formulas (1) to (3) are formulas based on the correlation between the Kc value at a welded joint of a steel material with a yield strength of the 390 MPa class and the Charpy characteristic values and uses as coefficients constants determined by studying the correlation based on numerous Charpy test results and deep notch test results relating to welded joints of high strength steel with a plate thickness of 70 mm or so (thick-gauge material) and a yield strength of the 460 MPa class or so, so the above formulas also fall in the range of the present invention.

As shown in Table 2, the Invention Example Nos. 1 to 13 have a value of the Hv(WM)/Hv(BM) or 1.1 or less and an Hv(WM) of 210 or less and have an estimated Kc(MN) value and estimated Kc(FC) value substantially matching the measured Kc value. From this, it is possible to use the results of the Charpy test to estimate the fracture toughness value of a welded joint, control and confirm the brittle fracture resistance characteristics of the welded joint, and ensure the safety of the welded structure.

As opposed to this, Comparative Example Nos. 14 to 25 have an Hv(WM)/Hv(BM) over the 1.1 prescribed by the present invention and have an estimated Kc(MN) value and estimated Kc(FC) value greatly different from the measured Kc value and a measured Kc value much lower than the estimated Kc value.

That is, when Hv(WM)/Hv(BM) is outside the range prescribed by the present invention, even if controlling the quality and properties of welded joints by the results of the Charpy test, the fracture toughness value will actually greatly fall, so the safety of the welded structure will not be controlled or confirmed and danger will result.

Table 1

| | NO. | Joint type | Weld heat input HI kJ/cm | Base metal hardness Hv(BM) | WM hardness Hv(WM) | Plate thickness position | Joint position | Plate thickness (mm) | σyo (MPa) | vE (J) | Temp. (°C) | vTrs (°C) |
|---|---|---|---|---|---|---|---|---|---|---|---|---|
| | | Joint | | | | Charpy test results | | | | | | |
| I n v . e x . | 1 | SEG-ARC | 360 | 185 | 188 | S | FL | 65 | 471 | 119 | -20 | -24.7 |
| | 2 | SEG-ARC | 360 | 180 | 171 | S | FL | 65 | 460 | 53 | -20 | -5.1 |
| | 3 | SEG-ARC | 400 | 185 | 172 | S | FL | 65 | 471 | 121 | -20 | -25.1 |
| | 4 | EG | 390 | 190 | 200 | C | FL | 70 | 485 | 162 | -20 | -32.2 |
| | 5 | EG | 470 | 228 | 248 | C | HAZ | 70 | 581 | 127 | -20 | -26.3 |
| | 6 | EG | 450 | 197 | 203 | C | HAZ | 100 | 503 | 122 | -40 | -45.3 |
| | 7 | SMAW | 45 | 312 | 237 | Q | HAZ | 50 | 796 | 116 | -40 | -44.1 |
| | 8 | SAW | 120 | 312 | 253 | Q | HAZ | 50 | 796 | 89 | -40 | -37.7 |
| | 9 | SAW | 120 | 312 | 225 | Q | HAZ | 50 | 796 | 88 | -40 | -37.4 |
| | 10 | VEGA2 | 430 | 196 | 198 | Q | HAZ | 70 | 501 | 56 | -20 | -6.4 |
| | 11 | VEGA2 | 430 | 220 | 206 | Q | HAZ | 70 | 560 | 75 | -20 | -13.5 |
| | 12 | VEGA2 | 430 | 192 | 169 | Q | HAZ | 70 | 490 | 82 | -20 | -15.7 |
| | 13 | VEGA2 | 430 | 184 | 201 | Q | HAZ | 70 | 470 | 60 | -20 | -8.1 |
| C o m p . e x . | 14 | SEG-ARC | 360 | 185 | 207 | S | FL | 65 | 471 | 100 | -20 | -20.5 |
| | 15 | SEG-ARC | 360 | 185 | 225 | S | FL | 65 | 471 | 75 | -20 | -13.5 |
| | 16 | SEG-ARC | 400 | 185 | 231 | S | FL | 65 | 471 | 132 | -20 | -27.2 |
| | 17 | EG | 390 | 190 | 236 | C | FL | 70 | 485 | 102 | -20 | -21.0 |
| | 18 | EG | 470 | 228 | 271 | C | HAZ | 70 | 581 | 103 | -20 | -21.2 |
| | 19 | EG | 450 | 197 | 227 | C | HAZ | 70 | 503 | 86 | -40 | -36.8 |
| | 20 | SMAW | 45 | 312 | 387 | Q | HAZ | 50 | 796 | 89 | -40 | -37.7 |
| | 21 | SAW | 120 | 312 | 412 | Q | HAZ | 50 | 796 | 61 | -40 | -28.5 |
| | 22 | SAW | 120 | 312 | 384 | Q | HAZ | 50 | 796 | 88 | -40 | -37.4 |
| | 23 | VEGA2 | 430 | 196 | 234 | Q | HAZ | 70 | 501 | 73 | -20 | -12.9 |
| | 24 | VEGA2 | 430 | 220 | 253 | Q | HAZ | 70 | 560 | 81 | -20 | -15.4 |
| | 25 | VEGA2 | 430 | 192 | 221 | Q | HAZ | 70 | 490 | 122 | -20 | -25.3 |

Table 2 (continuation of Table 1)

| | vTrs used for cal. (°C) | Itk at fatigue crack | Itk of mechanical notch | kO | Test temp. (°C) | Est. Kc (FC) (N/mm$^{1.5}$) | Est. Kc (MN) (N/mn$^{1.5}$) | Test temp. (°C) | Measured Kc(MN) (N/mm$^{1.5}$) | Hv (WM) / Hv (BM) |
|---|---|---|---|---|---|---|---|---|---|---|
| | | | Estimate of fracture toughness value Kc | | | | | Deep notch test results | | |
| Inv. ex. | -24.7 | 224 | 214 | 1047 | -40 | 3188 | 3970 | -40 | 4270 | 1.02 |
| | -5.1 | 233 | 223 | 1111 | -10 | 4413 | 5463 | -10 | 5683 | 0.95 |
| | -25.1 | 223 | 213 | 1045 | -40 | 3202 | 3987 | -40 | 4145 | 0.93 |
| | -32.2 | 221 | 211 | 1033 | -40 | 3424 | 4269 | -40 | 4460 | 1.05 |
| | -26.3 | 232 | 222 | 1105 | -40 | 3292 | 4077 | -40 | 3747 | 1.09 |
| | -45.3 | 220 | 210 | 1023 | -40 | 3649 | 4554 | -40 | 4753 | 1.03 |
| | -44.1 | 235 | 225 | 1120 | -60 | 2744 | 3394 | -60 | 3202 | 0.76 |
| | -37.7 | 239 | 229 | 1148 | -40 | 3953 | 4877 | -40 | 4709 | 0.81 |
| | -37.4 | 239 | 229 | 1149 | -40 | 3938 | 4859 | -40 | 5118 | 0.72 |
| | -6.4 | 237 | 227 | 1136 | -20 | 3801 | 4695 | -20 | 4494 | 1.01 |
| | -13.5 | 238 | 228 | 1143 | -60 | 1783 | 2201 | -60 | 2047 | 0.94 |
| | -15.7 | 231 | 221 | 1096 | -40 | 2863 | 3549 | -40 | 3536 | 0.88 |
| | -8.1 | 233 | 223 | 1112 | -20 | 3810 | 4717 | -20 | 5098 | 1.09 |
| Comp. ex. | -20.5 | 226 | 216 | 1062 | -40 | 3046 | 3788 | -40 | 1360 | 1.12 |
| | -13.5 | 230 | 220 | 1087 | -20 | 4082 | 5064 | -20 | 1529 | 1.22 |
| | -27.2 | 222 | 212 | 1038 | -20 | 4657 | 5804 | -20 | 1036 | 1.25 |
| | -21.0 | 228 | 218 | 1074 | -20 | 4363 | 5419 | -20 | 3691 | 1.24 |
| | -21.2 | 235 | 225 | 1125 | -60 | 1969 | 2435 | -60 | 777 | 1.19 |
| | -36.8 | 220 | 210 | 1025 | -40 | 3633 | 4533 | -40 | 1550 | 1.15 |
| | -37.7 | 239 | 229 | 1148 | -40 | 3953 | 4877 | -40 | 2907 | 1.24 |
| | -28.5 | 245 | 235 | 1188 | -40 | 3488 | 4288 | -40 | 1332 | 1.32 |
| | -37.4 | 239 | 229 | 1149 | -40 | 3938 | 4859 | -40 | 1439 | 1.23 |
| | -12.9 | 233 | 223 | 1112 | -20 | 4058 | 5023 | -20 | 1602 | 1.19 |
| | -15.4 | 237 | 227 | 1136 | -40 | 2889 | 3569 | -40 | 1220 | 1.15 |
| | -25.3 | 226 | 216 | 1060 | -40 | 3185 | 3961 | -40 | 2497 | 1.15 |

INDUSTRIAL APPLICABILITY

It is possible to reliably provide a welded structure resistant to brittle fracture even in the unlikely event that there is a weld defect at a welded joint or a fatigue crack occurs and grows.

According, the present invention remarkably increases the safety of welded structures, so is an invention with high value of utilization in industry.

**Claims**

1.  A method of verification of mechanical properties of a welded joint in a structure obtained by large heat input butt welding a high strength steel plate having a thickness of more than 50 mm used in ship hull having a yield point of 390 MPa or 460 MPa classes **characterized by** comprising the steps of:

    a) measuring a hardness of a weld metal Hv(WM),
    b) measuring an absorption energy vE and transition temperature vTrs, of a welded joint part by a V- notch Charpy impact test,
    c) confirming that the above measured Hv (WM) value satisfies a required Hv value being less than a hardness of the base metal Hv(BM)x1.1 or being 210 or less, and that the above measured vE value satisfies a required vE value of, by value measured at structure design temperature -10°C, 53 J or more, and

d) verifying that a predicted fracture toughness value Kc calculated by the following formulae (1) to (3) based on the measured transition temperature vTrs, satisfies a required Kc value

$$Kc(T) = 5.6\ \sigma y_0 \cdot exp\{K_0\ (1/iTk - 1/T)\}\ \cdots(1)$$

$$iTk = (0.00321\sigma y_0 + 0.391)vTrs + 2.74\sqrt{t} + X\ \cdots(2)$$

$$K_0 = 6.65\ iTk - 440\ \cdots(3)$$

where,

$\sigma y_0$: room temperature yield strength ($kg/mm^2$)
t: plate thickness (mm)
T: test temperature,
X: coefficient related to notch sharpress, where X=66.1 or X=56.1

**2.** A method of verification of mechanical properties of a welded joint in a structure obtained by large heat input butt welding a high strength steel plate having a thickness of more than 50 mm used in ship hull having a yield point of 390 MPa or 460 MPa classes according to claim 1, **characterized in that** the iTk value is determined by the following formula (4)

$$iTk = (0.00321\sigma y_0 + 0.391)vTrs + 2.74\sqrt{t} + X\ \cdots(4).$$

with X=56.1

**3.** A method of verification of mechanical properties of a welded joint in a structure obtained by large heat input butt welding a high strength steel plate having a thickness of more than 50 mm used in shiphull having a yield point of 390 MPa or 460 MPa classes according to claim 1 or 2, **characterized in that** the required Kc value is over 4354 $N/mm^{1.5}$.

**Patentansprüche**

**1.** Verfahren zur Überprüfung mechanischer Eigenschaften einer Schweißverbindung in einer Struktur, die erhalten wird durch mit großem Wärmeeintrag erfolgendes Stumpfschweißen eines in Schiffsrümpfen verwendeten hochfesten Stahlblechs mit einer Dicke über 50 mm und mit einer Streckgrenze der Klasse 390 MPa oder 460 MPa, **dadurch gekennzeichnet, daß** es die Schritte aufweist:

a) Messen einer Härte eines Schweißguts Hv(WM),
b) Messen einer Absorptionsenergie vE und einer Übergangstemperatur vTrs eines Schweißverbindungsteils durch einen Kerbschlagbiegeversuch nach Charpy,
c) Bestätigen, daß der vorstehend gemessene Wert Hv (WM) einen erforderlichen Hv-Wert erfüllt, der kleiner als eine Härte des Grundmetalls Hv(BM)x1,1 ist oder höchstens 210 beträgt, und daß der vorstehend gemessene Wert vE einen erforderlichen vE-Wert von mindestens 53 J in der Wertmessung bei -10 °C Strukturdesigntemperatur erfüllt, und
d) Überprüfen, daß ein vorhergesagter Bruchzähigkeitswert Kc, der durch die folgenden Formeln (1) bis (3) auf der Grundlage der gemessenen Übergangstemperatur vTrs berechnet wird, einen erforderlichen Kc-Wert erfüllt:

$$Kc(T) = 5,6\ \sigma y_0 \cdot \exp\{K_0(1/iTk-1/T)\} \qquad (1),$$

$$iTk = (0,00321\sigma y_0 + 0,391)vTrs + 2,74\sqrt{t}+X \qquad (2),$$

$$K_0 = 6,65\ iTk-440 \qquad (3),$$

wobei

$\sigma y_0$: Streckfestigkeit bei Raumtemperatur (kg/mm$^2$),
t: Blechdicke (mm),
T: Versuchstemperatur,
X: auf die Kerbschärfe bezogener Koeffizient, wobei X = 66,1 oder X = 56,1.

2. Verfahren zur Überprüfung mechanischer Eigenschaften einer Schweißverbindung in einer Struktur, die erhalten wird durch mit großem Wärmeeintrag erfolgendes Stumpfschweißen eines in Schiffsrümpfen verwendeten hochfesten Stahlblechs mit einer Dicke über 50 mm und mit einer Streckgrenze der Klasse 390 MPa oder 460 MPa nach Anspruch 1, **dadurch gekennzeichnet, daß** der iTk-Wert durch die folgende Formel (4) bestimmt wird:

$$iTk = (0,00321\sigma y_0 + 0,391)vTrs + 2,74\sqrt{t}+X \qquad (4),$$

wobei X = 56,1.

3. Verfahren zur Überprüfung mechanischer Eigenschaften einer Schweißverbindung in einer Struktur, die erhalten wird durch mit großem Wärmeeintrag erfolgendes Stumpfschweißen eines in Schiffsrümpfen verwendeten hochfesten Stahlblechs mit einer Dicke über 50 mm und mit einer Streckgrenze der Klasse 390 MPa oder 460 MPa nach Anspruch 1 oder 2, **dadurch gekennzeichnet, daß** der erforderliche Kc-Wert über 4354 N/mm$^{1,5}$ liegt.

**Revendications**

1. Procédé de vérification des propriétés mécaniques d'un joint soudé dans une structure que l'on obtient via un soudage par résistance bout-à-bout dans des conditions d'apport de chaleur importante d'une tôle d'acier à haute résistance mécanique possédant une épaisseur supérieure à 50 mm que l'on utilise dans des coques de navires, possédant une limite d'élasticité apparente dans les classes de 390 MPa ou de 460 MPa, **caractérisé par le fait qu'**il comprend les étapes consistant à :

a) mesurer une dureté d'un métal d'apport Hv (WM) ;
b) mesurer une énergie d'absorption vE et une température de transition vTrs d'un joint soudé via un test de résilience Charpy à l'éprouvette avec entaille en V ;
c) confirmer **le fait que** la valeur Hv (WM) mesurée ci-dessus répond à une valeur Hv requise qui est inférieure à une dureté du métal de base Hv(BM)x1.1 ou égale à 210 ou moins, et que la valeur vE mesurée ci-dessus répond à une valeur vE requise, la valeur étant mesurée à la température de calcul de la structure égale à -10°C, de 53 J ou plus ; et
d) vérifier **le fait qu'**une valeur de ténacité prédite Kc calculée par les formules suivantes (1) à (3) en se basant sur la température de transition mesurée vTrs, répond à une valeur Kc requise :

$$Kc(T) = 5.6\ \sigma y_0 \cdot \exp\{K_0(1/iTk-1/T)\} \quad \cdots\cdots(1)$$

$$iTk = (0.00321\sigma y_0 + 0.391)\sqrt{Trs} + 2.74\sqrt{t} + x \dots (2)$$

$$K_0 = 6.65\ iTk - 440 \dots (3)$$

où

$\sigma y_0$: représente la limite pratique d'élasticité à la température ambiante (kg/mm$^2$) ;

t : représente l'épaisseur de la tôle (mm) ;

T : représente la température d'essai ;

x : représente le coefficient lié à l'acuité d'entaille, x étant égal à 66,1 ou bien x étant égal à 56,1.

2. Procédé de vérification des propriétés mécaniques d'un joint soudé dans une structure que l'on obtient via un soudage par résistance bout-à-bout dans des conditions d'apport, de chaleur importante d'une tôle d'acier à haute résistance mécanique possédant une épaisseur supérieure à 50 mm que l'on utilise dans des coques de navires, possédant une limite d'élasticité apparente dans les classes de 390 MPa ou de 460 MPa, selon la revendication 1, **caractérisé par le fait que** l'on détermine la valeur iTk via la formule suivante (4) :

$$iTk = (0.00321\sigma y_0 + 0.391)\sqrt{Trs} + 2.74\sqrt{t} + x \dots (4)$$

où x = 56,1.

3. Procédé de vérification des propriétés mécaniques d'un joint soudé dans une structure que l'on obtient via un soudage par résistance bout-à-bout dans des conditions d'apport de chaleur importante d'une tôle d'acier à haute résistance mécanique possédant une épaisseur supérieure à 50 mm que l'on utilise dans des coques de navires, possédant une limite d'élasticité apparente dans les classes de 390 MPa ou de 460 MPa, selon la revendication 1 ou 2, **caractérisé par le fait que** la valeur Kc requise est supérieure à 4354 N/mm$^{1,5}$.

# Fig.1

# Fig.2

●    DEEP NOTCH TEST RESULTS
○    CHARPY TEST RESULTS ESTIMATED VALUE
---- SUITABLE UPPER LIMIT

# Fig.3

● Hv(WM)/Hv(BM)<1.1
□ Hv(WM)/Hv(BM)>1.1
——— PREDICTED VALUE=MEASURED VALUE

# Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005144552 A

- JP 6088161 A

**Non-patent literature cited in the description**

- *ClassNK Magazine No. 248,* 1999, 158-167